# EUROPÄISCHE PATENTSCHRIFT

(11) **EP 1 764 145 B1**
(45) Veröffentlichungstag und Bekanntmachung des Hinweises auf die Patenterteilung: **30.03.2011**
(21) Anmeldenummer: 06120481.4
(22) Anmeldetag: 12.09.2006
(51) Int. Cl.: B01D 53/50

(54) **Verfahren zum Einstellen der Schwefeldioxidkonzentration in Rauchgasen**
Process for regulating the concentration of sulphur dioxide in flue gases
Procédé pour la régulation de la concentration en dioxyde de soufre dans des fumées

(30) Priorität: 20.09.2005 DE 102005044779
(43) Veröffentlichungstag der Anmeldung: 21.03.2007
(73) Patentinhaber: Messer Group GmbH, 65843 Sulzbach (DE)
(72) Erfinder: Rohovec, Joachim, 2500 Baden bei Wien (AT)

(56) Entgegenhaltungen:
- EP-A2- 0 815 923
- DE-A1- 3 240 317
- DE-A1- 3 245 754
- US-A- 5 168 065

## Beschreibung

Die Erfindung betrifft ein Verfahren zum Einstellen der Schwefeldioxidkonzentration in Rauchgasen, bei dem in einem Waschturm das zu reinigende Gas einer Wasser und Kalk enthaltenden Waschsuspension zugeführt, in die Waschsuspension ein Oxidationsmittel eingeblasen und das schwefeldioxidarme gereinigte Abgas abgeführt wird und der Schwefeldioxidgehalt des zu reinigenden Gases und/oder des gereinigten Abgases kontinuierlich oder in vorgegebenen Zeitabständen gemessen wird.

Derartige Verfahren sind unter dem Begriff "Rauchgasentschwefelung" bekannt.

Bei der Verbrennung von Kohle und Erdgas bzw. Erdöl entsteht u.a. das Gas Schwefeldioxid, welches eine wesentliche Ursache für das Waldsterben und andere Umweltschäden darstellt. Die deutschen Stromversorger haben in den letzten Jahren erhebliche Mittel für die Installation von Rauchgasentschwefelungsanlagen (REA) eingesetzt. Die Schwefeldioxidemissionen sanken dadurch von 1,55 Millionen Tonnen im Jahr 1982 auf weniger als 120 000 Tonnen in 2004. Es gibt verschiedene Verfahren, dem Rauchgas das schädliche Schwefeldioxid zu entziehen. Am häufigsten wird das so genannte Nassverfahren verwendet, das in Deutschland bei über 98% aller Rauchgasentschwefelungsanlagen zum Einsatz kommt. Dabei wird das ungereinigte Rauchgas in einem Waschturm, auch Absorberturm genannt, mit einem Gemisch aus Wasser und Kalk, einer so genannten Waschsuspension, besprüht, wodurch das Schwefeldioxid aus dem Rauchgas herausgelöst und durch chemische Reaktionen weitgehend absorbiert wird. Der Entschwefelungsgrad kann auf diese Weise bis zu ca. 90% erreichen.

Dabei geht das gasförmige Schwefeldioxid zunächst in der Waschsuspension in Lösung. Anschließend entsteht durch die Reaktion von Schwefeldioxid und Kalkstein Kalziumsulfit und Kohlendioxid:

SO₂ + CaCO₃ → CaSO₃ + CO₂ [1]

Im unteren Teil des Waschturms, im Absorbersumpf, sammelt sich die mit Kalziumsulfit beladene Waschsuspension. Durch Einblasen von Luft, der sogenannten Aufoxidation, wird die Flüssigkeit mit Sauerstoff angereichert und es entsteht eine Gipssuspension:

2CaSO₃ + 4H₂O + O₂ → 2(CaSO₄ · 2H₂0) [2]

Nach Entzug des Wassers fällt Gips mit bis zu 10 % Restfeuchte in rieselfähiger Form an und steht als wertvolles Produkt zur Abgabe an die Baustoffindustrie oder andere Verwendungen zur Verfügung.

Dieses Verfahren hat sich bewährt; Kraftwerksbetreiber klagen jedoch zunehmend über die nachlassende Qualität der verwendeten Brennstoffe. Vor allem Braunkohle und Erdgas zeigen in den letzten Jahren steigende Schwefelgehalte. Dies führt beispielsweise bei kalorischen Kraftwerken zu der ungünstigen Situation, dass die Rauchgasentschwefelungsanlage mit maximaler Leistung betrieben werden müssen und trotzdem die zur Stromgewinnung erfolgende Verbrennung nicht mit der ausgelegten Kapazität betrieben werden kann. Für die Kraftwerksbetreiber bedeutet dies Umsatzeinbußen wegen verminderter Leistung oder erhebliche Mehrkosten durch den Einbau zusätzlicher oder größerer Rauchgasentschwefelungsanlagen.

In der EP 0 815 923 A2 und US 5 158 065 B wurde bereits vorgeschlagen, die Verhältnisse bei der Entschwefelung dadurch zu optimieren, dass der Volumenstrom des zugeführten Oxidationsmittels den jeweiligen Anforderungen angepasst wird. Dies führt allerdings zu einem hohen apparativen Aufwand, der unbefriedigend ist.

Aufgabe der vorliegenden Erfindung ist daher, eine Möglichkeit zu schaffen, mit der der Schwefeldioxidgehalt von Rauchgasen kostengünstig weiter reduziert werden kann.

Gelöst ist diese Aufgabe bei einem Verfahren der eingangs genannten Art dadurch, dass das in die Waschsuspension eingeblasene Oxidationsmittel mit reinem Sauerstoff angereichert und/oder zumindest teilweise ersetzt, wobei sich der Umfang der Anreicherung und/oder der Ersetzung an der erforderlichen Reduktion des Schwefeldioxidgehalts orientiert.

Die grundsätzliche Idee der Erfindung besteht darin, das Oxidationsmittel mit reinem Sauerstoff anzureichern und/oder zumindest teilweise zu ersetzen, wobei sich der Umfang der Anreicherung und/oder der Ersetzung an der erforderlichen Reduktion des Schwefeldioxidgehalts orientiert. Damit wird bei stark schwefelbelasteten Brennstoffen eine Kapazitätssteigerung dieser Anlagenkomponente ermöglicht. Bei schwach schwefelhaltigen Brennstoffen wird dagegen eine preisgünstige Entschwefelung durchgeführt, da auf den Einsatz von zusätzlichem Sauerstoff teilweise oder vollständig verzichten kann. Die Erfindung ermöglicht also die Anpassung der Zusammensetzung des Oxidationsmittels an die jeweiligen Erfordernisse; ein wirtschaftliches Ergebnis wird insbesondere dadurch erzielt, dass der teure Reinsauerstoff nur in der tatsächlich benötigten Menge zugeführt werden muss. Es ist davon auszugehen, dass eine Sauerstoffanreicherung von maximal 10% genügt, um selbst stark schwefeldioxidhaltige Rauchgase zu behandeln und einen Entschwefelungsgrad, also eine Reduzierung des Schwefeldioxidgehalts im Abgas, von mehr als 95% zu erreichen.

Die Erfindung macht insbesondere von dem Umstand Gebrauch, dass sich Schwefeldioxid hervorragend in Wasser löst und sich somit die Schwefeldioxidkonzentration in der Waschsuspension stets am Rande der Sättigungsgrenze befindet. Die Zugabe von Sauerstoff in die Waschsuspension führt zu einer Erhöhung des Reaktionsumsatzes der Reaktion [2] und dadurch zu einer Minderung der Konzentration von CaCO₃ in der Waschsuspension. Das System reagiert nach dem Prinzip von LeChatelier darauf damit, dass gemäß der Reaktion [1] vermehrt SO₂ umgesetzt wird, um den Mangel an CaCO₃ auszugleichen. Die Zugabe von Sauerstoff führt also zu einer beschleunigten Auswaschung von Schwefeldioxid aus dem Rauchgas. Umgekehrt führt eine verringerte Sauerstoffzufuhr zu einem reduzierten Schwefeldioxidumsatz, was für gering belastete Rauchgase ausreichend sein mag. Abhängig vom jeweils angestrebten Grenzwert ermöglicht so die Zuführung von Sauerstoff eine zielgenaue Einstellung des Schwefeldioxidanteils im Abgas.

Die Aufgabe der Erfindung wird auch mit einer Rauchgasentschwefelungsanlage zur Durchführung des erfindungsgemäßen Verfahrens mit einem Waschturm zum Einleiten eines schwefeldioxidhaltigen Gases in eine Waschsuspension, einer Einrichtung zum Einleiten von Oxidationsmittel in die Waschsuspension, einer Einrichtung zum Einleiten von Sauerstoff in die Waschsuspension und/oder in das Oxidationsmittel und einer mit der Einrichtung zum Einleiten von Sauerstoff datenverbundenen Mess- und Regeleinrichtung zum Erfassen des Schwefeldioxidgehaltes in dem dem Waschturm zugeführten oder vom Waschturm abgeführten Abgas gelöst. Die erfindungsgemäße Rauchgasentschwefelungsanlage ermöglicht die Reduzierung des Schwefeldioxidanteils im Abgas auf einen vorgegebenen Wert, unabhängig von der Qualität des eingesetzten Brennstoffs, insbesondere von der Belastung des Brennstoffs mit Schwefel oder Schwefelverbindungen.

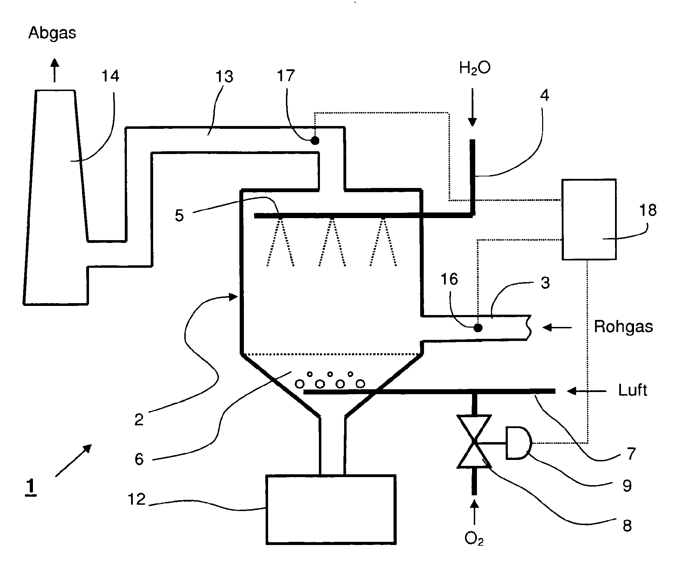

Anhand der einzigen Zeichnung soll ein Ausführungsbeispiel der Erfindung näher erläutert werden.

Die in der Zeichnung schematisch dargestellte Rauchgasentschwefelungsanlage 1 umfasst einen Waschturm 2 zum Einleiten eines schwefeldioxidhaltigen Gases aus einer Abgaszuleitung 3. Der Abgaszuleitung 3 sind in bekannter und hier nicht gezeigter Weise Anlagen zur Ausfilterung von Stäuben und zur Rauchgasentstickung vorgeschaltet. In den Waschturm 2 mündet eine Wasserzuleitung 4 ein, die innerhalb des Waschturms 2 mit einer Düsenanordnung 5 zur Zerstäubung des Wassers ausgerüstet ist. In einen unteren Teil des Waschturms 2, dem Absorbersumpf, mündet eine Oxidationsmittelzuführung 7 ein, die innerhalb des Waschturms 2 mit Strömungsöffnungen versehen ist, um die sich im unteren Teil des Waschturms 2 sammelnde Waschsuspension 6 mit Oxidationsmittel anzureichern. In die Oxidationsmittelzuführung 7 mündet wiederum eine Sauerstoff-Zuführleitung 8 ein, die über ein Ventil 9 in hier nicht gezeigter Weise mit einer Sauerstoffquelle, beispielsweise einem Standtank, verbunden ist. Das Ventil 9 wird mittels eines ansteuerbaren Motors 10 eingestellt und ist in der Lage, eine genau dosierte Menge von Sauerstoff in die Oxidationsmittelzuführung 7 einzuspeisen. Die im Zuge der Rauchgasentschwefelung nach Reaktion [2] entstehende Gipssuspension wird in einem Gipssilo 12 gesammelt und einer weiteren Verwendung zugeführt. Zum Abführen des vom Schwefeldioxid gereinigten Abgases aus dem Waschturm 2 dient eine Abluftleitung 13, die mit einem Kamin 14 strömungsverbunden ist.

Sowohl in der Abgaszuleitung 3 als auch in der Abluftleitung 13 sind Sensoren 16,17 zum Messen des Schwefeldioxidgehaltes des dem Waschturm 2 zugeführten bzw. des gereinigten Abgases angeordnet. Die Sensoren 16,17 sind ebenso wie der Motor mit einer Steuereinheit 18 datenverbunden. Die Steuereinheit 18 dient dazu, den Sauerstoffanteil des dem Waschturm 2 zugeführten Oxidationsmittels in Abhängigkeit von den in der Abgaszuleitung 3 und/oder der Abluftleitung 13 gemessenen Werten der Konzentration an Schwefeldioxid zu regeln.

Beim Betrieb der Rauchgasentschwefelungsanlage 1 tritt das mit Schwefeldioxid beladene Abgas über die Abgaszuleitung 3 in den Waschturm 2 ein. Das Schwefeldioxid wird im Waschturm 2 mittels des über die Düsenanordnung 5 eingesprühten Wassers aus dem Abgas herausgewaschen. Das mit Schwefeldioxid angereicherte Wasser bildet zusammen mit dem Waschturm 2 zugeführtem Kalk die Waschsuspension 6. Durch Zuführung eines Oxidationsmittels über die Oxidationsmittelzuführung 7 in die Waschsuspension 6 werden Schwefeldioxid, Kalk und Wasser gemäß den Reaktionen [1] und [2] zu einer Gipssuspension umgesetzt.

Durch die Zugabe von Sauerstoff über die Sauerstoffzuführung 8 und die dadurch herbeigeführte erhöhte Sauerstoffkonzentration im der Waschsuspension 6 wird der Reaktionsumsatz der Reaktion [2] gesteigert; es wird also mehr CaSO₃ oxidiert, das aus der Reaktion [1] herangezogen werden muss, was in der Folge zu einer verstärkten Lösung von SO₂ in die Waschsuspension 6 führt. Bei einer Verminderung der Sauerstoffzufuhr wird der Reaktionsumsatz entsprechend gesenkt. Auf dieses Weise ist es möglich, durch Zugabe einer genau dosierten Menge an Sauerstoff den Anteil an Schwefeldioxid in dem in der Abluftleitung 13 aus dem Waschturm 2 abgeführten Gas zuverlässig unterhalb eines vorgegebenen Grenzwertes zu halten. Dadurch wird ein besonders wirtschaftlicher Einsatz von Sauerstoff gewährleistet.

Es ist im Übrigen auch möglich, bestehende Rauchgasentschwefelungsanlagen 1 erfindungsgemäß nachzurüsten somit mit einer höheren als der nominalen Kapazität der Anlage zu betreiben, bzw. die nominale Kapazität auch dann zu gewährleisten, wenn die zu reinigenden Abgase einen zunehmenden Schwefeldioxidanteil aufweisen - bedingt beispielsweise durch einen höheren Schwefelgehalt im Brennstoff.

Die Erfindung kann in allen Prozessen eingesetzt werden, bei denen ein schwefeldioxidhaltiges Rauchgas entsteht, insbesondere, aber nicht beschränkt darauf, in kalorischen Kraftwerken.

### Bezugszeichenliste

- 1.: Rauchgasentschwefelungsanlage
- 2.: Waschturm
- 3.: Abgaszuleitung
- 4.: Wasserzuleitung
- 5.: Düsenanordnung
- 6.: Waschsuspension
- 7.: Oxidationsmittelzuführung
- 8.: Sauerstoff-Zuleitung
- 9.: Ventil
- 10.: -
- 11.: -
- 12.: Gipssilo
- 13.: Abluftleitung
- 14.: Kamin
- 15.: -
- 16.: Sensor
- 17.: Sensor
- 18.: Steuereinheit

## Patentansprüche

1. Verfahren zum Einstellen der Schwefeldioxidkonzentration in Rauchgasen, bei dem in einem Waschturm (2) das zu reinigende Gas einer Wasser und Kalk enthaltenden Waschsuspension (6) zugeführt, in die Waschsuspension (6) ein Oxidationsmittel eingeblasen, das schwefeldioxidarme gereinigte Abgas abgeführt und der Schwefeldioxidgehalt des zu reinigenden Gases und/oder des gereinigten Abgases kontinuierlich oder in vorgegebenen Zeitabständen gemessen wird,
**dadurch gekennzeichnet,**
**dass** das in die Waschsuspension (6) eingeblasene Oxidationsmittel mit reinem Sauerstoff angereichert und/oder zumindest teilweise ersetzt wird, wobei sich der Umfang der Anreicherung und/oder der Ersetzung an der erforderlichen Reduktion des Schwefeldioxidgehalts orientiert.

2. Verfahren nach Anspruch 1, **dadurch gekennzeichnet, dass** als Oxidationsmittel Luft oder sauerstoffangereicherte Luft zum Einsatz kommt.

3. Rauchgasentschwefelungsanlage (1) zur Durchführung eines Verfahrens nach Anspruch 1 oder 2, mit einem Waschturm (2) zum Einleiten eines schwefeldioxidhaltigen Gases in eine Waschsuspension (6), einer Einrichtung (7) zum Einleiten von Oxidationsmittel in die Waschsuspension (6), einer Einrichtung (8,9) zum Einleiten von Sauerstoff in die Waschsuspension (6) und/oder in das Oxidationsmittel und einer mit der Einrichtung (8,9) zum Einleiten von Sauerstoff datenverbundenen Mess- und Regeleinrichtung (16,17,18) zum Erfassen des Schwefeldioxidgehaltes in dem dem Waschturm (2) zugeführten oder vom Waschturm (2) abgeführten Abgas.

## Claims

1. Process for regulating the concentration of sulphur dioxide in flue gases, in which the gas that is to be purified is fed in a scrubbing tower (2) to a water and lime-containing scrubbing suspension (6), an oxidizing agent is blown into the scrubbing suspension (6), the low-sulphur dioxide purified exhaust gas is removed and the sulphur dioxide content of the gas that is to be purified and/or of the purified exhaust gas is measured continuously or in preset time intervals, **characterized in that** the oxidizing agent that is blown into the scrubbing suspension (6) is enriched and/or at least partly replaced by pure oxygen, wherein the extent of the enrichment and/or the replacement is guided by the required reduction of the sulphur dioxide content.

2. Process according to Claim 1, **characterized in that** air or oxygen-enriched air is used as oxidizing agent.

3. Flue gas desulphurization plant (1) for carrying out a process according to Claim 1 or 2, having a scrubbing tower (2) for introducing a sulphur dioxide-containing gas into a scrubbing suspension (6), an appliance (7) for introducing oxidizing agent into the scrubbing suspension (6), an appliance (8, 9) for introducing oxygen into the scrubbing suspension (6) and/or into the oxidizing agent and having a measuring and closed-loop control appliance (16, 17, 18) that is data-connected to the appliance (8, 9) for introducing oxygen, and is for determining the sulphur dioxide content in the exhaust gas fed to the scrubbing tower (2) or removed from the scrubbing tower (2).

## Revendications

1. Procédé d'ajustement de la concentration en dioxyde de soufre dans des gaz de combustion, selon lequel le gaz à purifier est introduit dans une suspension de lavage (6) contenant de l'eau et de la chaux dans une tour de lavage (2), un agent d'oxydation est fait barboter dans la suspension de lavage (6), le gaz d'échappement purifié pauvre en dioxyde de soufre est déchargé et la teneur en dioxyde de soufre du gaz à purifier et/ou du gaz d'échappement purifié est mesurée en continu ou à des intervalles de temps prédéterminés, **caractérisé en ce que** l'agent d'oxydation fait barboter dans la suspension de lavage (6) est enrichi en et/ou au moins partiellement remplacé par de l'oxygène pur, l'envergure de l'enrichissement et/ou du remplacement étant orientée par la réduction nécessaire de la teneur en dioxyde de soufre.

2. Procédé selon la revendication 1, **caractérisé en ce que** de l'air ou de l'air enrichi en oxygène est utilisé en tant qu'agent d'oxydation.

3. Installation de désulfuration de gaz de combustion (1) pour la réalisation d'un procédé selon la revendication 1 ou 2, comprenant une tour de lavage (2) pour l'introduction d'un gaz contenant du dioxyde de soufre dans une suspension de lavage (6), un dispositif (7) pour l'introduction d'un agent d'oxydation dans la suspension de lavage (6), un dispositif (8, 9) pour l'introduction d'oxygène dans la suspension de lavage (6) et/ou dans l'agent d'oxydation et un dispositif de mesure et de réglage (16, 17, 18) connecté par connexion de données avec le dispositif (8, 9) pour l'introduction d'oxygène, pour l'enregistrement de la teneur en dioxyde de soufre dans le gaz d'échappement introduit dans la tour de lavage (2) ou déchargé de la tour de lavage (2).
